# EUROPÄISCHE PATENTSCHRIFT

(11) **EP 0 769 677 B1**
(45) Veröffentlichungstag und Bekanntmachung des Hinweises auf die Patenterteilung: **12.06.2002**
(21) Anmeldenummer: 96116380.5
(22) Anmeldetag: 12.10.1996
(51) Int. Cl.: G01B 21/04, G01B 21/20

(54) **Verfahren zur Koordinatenmessung an Werkstücken**
Procedure for the coordinate measurement on objects
Procédé pour la mesure de coordonnées d'objets

(30) Priorität: 20.10.1995 DE 19539148
(43) Veröffentlichungstag der Anmeldung: 23.04.1997
(60) Teilanmeldung: 02004930.0
(73) Patentinhaber: Carl Zeiss, 89518 Heidenheim (Brenz) (DE); Carl-Zeiss-Stiftung trading as Carl Zeiss, 89518 Heidenheim (Brenz) (DE)
(72) Erfinder: Arndt, Thomas, 12249 Berlin (DE); Herklotz, Henrik, 12051 Berlin (DE)

(56) Entgegenhaltungen:
- EP-A- 0 638 781
- WO-A-88/09915
- GB-A- 2 045 437
- WOLFGANG KNAPP: "Die Prüfung der Messgerätegenauigkeit mit dem Kreisformtest" TECHNISCHE RUNDSCHAU, Bd. 77, Nr. 42, Oktober 1985, BERN,SCHWEIZ, Seiten 12-20, XP002056533

## Beschreibung

Die Erfindung betrifft ein Verfahren zur Koordinatenmessung an Werkstücken mit einem KMG (Koordinatenmeßgerät), bei dem die ermittelten Meßwerte mit gespeicherten Korrekturwerten verrechnet werden.

Zur Erhöhung der Meßgenauigkeit von KMG werden bereits seit geraumer Zeit die Meßergebnisse, d.h. die Koordinatenmeßwerte, die von den Maßstäben in den Meßachsen der Maschine geliefert werden, mit rechnerischen Korrekturen versehen. Eine Übersicht über verschiedene zu diesem Zwecke bereits eingesetzte Korrekturverfahren findet sich beispielsweise in der älteren Anmeldung P 44 36 507.1 der Anmelderin. In der genannten älteren Anmeldung werden insbesondere auch Fehler korrigiert, die sich auf die dynamische Deformation der Aufbauten des Koordinatenmeßgeräts aufgrund der Beschleunigung der Meßschlitten und der Massenträgheit der bewegten Teile zurückführen lassen. Obwohl mit dem dort beschriebenen Korrekturverfahren die Meßfehler eines KMG weitgehend reduziert und die Meßgenauigkeit beträchtlich gesteigert werden kann, verbleiben doch bei bestimmten Meßaufgaben noch Restfehler, die nicht ohne weiteres vernachlässigt werden können.

So werden beispielsweise aufgrund der verbesserten Leistungsfähigkeit einzelner Systemkomponenten Koordinatenmeßgeräte derzeit zunehmend auch für Formmessungen und für die Bestimmung von Lagemerkmalen an kreisförmigen bzw. zylindrischen Geometrieelementen eingesetzt. Allerdings ist die Meßunsicherheit bei der Bestimmung von Formabweichungen mit einem KMG derzeit noch um etliches höher als bei konventionellen Formmeßgeräten für Kreis-, Zylinder- und Kugelform. Die Ursachen dafür sind im wesentlichen Meßsystem- und gerätedynamisch bedingt. Zu einem wesentlichen Ursachenkomplex gehören dabei kaum oder nur aufwendig korrigierbare Restfehler, die sich aus der Dynamik der Verfahrbewegungen der Meßschlitten des KMG ergeben. Neben den in der älteren Anmeldung beschriebenen fliehkraftbedingten Fehlern maximal zweiter Ordnung treten nämlich auch Fehler höherer Ordnung auf wie Schleppfehler, Schwingungen des Reglers, der die Meßkraft konstant halten soll, etc. Diese Fehler sind zwar systematisch und reproduzierbar, lassen sich aber nicht durch einen einfachen mathematischen Zusammenhang beschreiben. Zudem kann sich das diesbezügliche Fehlerverhalten des Geräts während seiner Nutzungsdauer ändern, u.a. durch wechselnde thermische Einflüsse, mechanische Beanspruchung und Verschleiß sowie durch Änderungen von Kennlinien der elektronischen Komponenten in der Steuerung und den Antrieben des KMG, beispielsweise auch nach einem Austausch derartiger Komponenten.

Der Artikel "Die Prüfung der Meßgerätegenauigkeit mit dem Kreisformtest" von Wolfgang Knapp, erschienen in "Technische Rundschau", Band 77, Nr. 42, Oktober 1985, Bern, Schweiz, Seiten 12-20 zeigt ein Verfahren, mit dem die Meßgenauigkeit von Koordinatenmeßgeräten überprüft werden kann. Hierin werden Kreisscheiben oder Kreisringe mit bekanntem Durchmesser an unterschiedlichen Stellen im Meßraum des Koordinatenmeßgerätes positioniert und vom Koordinatenmeßgerät vermessen. Aus der Abweichung der gemessenen Meßwerte gegenüber der tatsächlichen Form kann die Meßgenauigkeit des Koordinatenmeßgerätes überprüft werden.

Die europäische Patenanmeldung EP 0 638 781 A1 zeigt ein Verfahren zum Kalibrieren eines messenden Tastkopfes. Hierbei wird ein Prüfkörper an unterschiedlichen Stellen angetastet, wobei aus der Auslenkung des Taststiftes gegenüber dem Tastkopf in den drei Koordinatenrichtungen entsprechende Korrekturwerte ermittelt werden, die den Meßwerten bei einer späteren Messung zur Korrektur der Meßwerte entsprechend überlagert werden.

Es ist die Aufgabe der vorliegenden Erfindung ein Verfahren zur Koordinatenmessung an Werkstücken anzugeben, mit dem sich auch die vorstehend beschriebenen Restfehler beseitigen lassen, um die Meßgenauigkeit eines KMG bei der Formmessung von kreisförmigen, zylindrischen und kugelförmigen Geometrieelementen noch weiter zu erhöhen.

Diese Aufgabe wird mit den im Kennzeichen des Anspruchs 1 angegebenen Maßnahmen gelöst.

Indem in mehreren Positionen bzw. Ebenen des Meßbereichs des KMG kreisförmige oder kreissegmentförmige Meßlinien unterschiedlichen Durchmessers und jeweils genau bekannter Form bei unterschiedlichen Geschwindigkeiten abgetastet werden, lassen sich die beschriebenen Fehlereinflüsse zuverlässig erfassen und die gemessenen Formabweichungen anschließend maschinenspezifisch in Form von Korrekturwerten speichern. Diese Korrekturwerte können dann beliebig im Zuge von Nachkalibrierungen aktualisiert werden. Es ist somit möglich, bei der anschließenden Koordinatenmessungen an kreisförmigen Konturen von z.B. zylindrischen Werkstücken die Korrekturwerte mit den Meßwerten des KMG zu verrechnen. Auf diesem Wege sind bei Formmessungen mit einem KMG Meßgenauigkeiten erreichbar, die mit denen konventioneller Formmeßgeräte vergleichbar sind.

In besonderen maschinenspezifischen Fällen kann es für das Erreichen einer hohen Meßgenauigkeit erforderlich sein, die Meßlinien mit positivem und negativem Umlaufsinn abzutasten und die Korrekturwerte zusätzlich abhängig vom Umlaufsinn aufzunehmen und zu speichern. Es hat sich nämlich gezeigt, daß die Überlagerung von Meßfehlern höherer Ordnung zu einem geringen Prozentsatz auch vom Umlaufsinn der Messung abhängt.

Da bei funktionsorientierter Auswertung von Formmessungen häufig unterschiedliche Filter über die Meßwerte gelegt werden, ist es zweckmäßig, auch die gemessenen Formabweichungen mit unterschiedlichen Filterfunktionen zu falten und abhängig vom gewählten Filter zu speichern.

Um die Anzahl der zu speichernden Korrekturwerte zu verringern, kann es vorteilhaft sein, die gemessenen Formabweichungen sektoriell so zu speichern, daß jeweils für ein Teil-Kreissegment der Meßlinie nur ein einzelner Korrekturwert abgespeichert wird. Zusätzliche Korrekturwerte für die einzelnen Meßpunkte innerhalb eines Teil-Kreissegments lassen sich dann beispielsweise aus den gespeicherten Korrekturwerten für benachbarte Teil-Kreissegmente interpolieren. Auf diese Weise wird dann vermieden, daß sich die Grenzen der Sektoreinteilung nach der Verrechnung mit den Korrekturwerten im Formplot abbilden.

Im Hinblick auf einen möglichst hohen Meßkomfort ist es weiterhin zweckmäßig, die Korrekturwerte in Dateien zu speichern; die nach vorbestimmten Meßaufgaben parametrisiert sind. Es ist dann beispielsweise möglich, mit Hilfe eines geeigneten Softwareprogrammes vor dem Beginn der Messungen an einem Werkstück die eingegebenen Parameter, die die Meßaufgabe beschreiben, mit den Dateinamen zu vergleichen, in denen die zugehörigen Korrekturwerte gespeichert sind, und das Vorhandensein von zur Meßaufgabe passenden Korrekturwerten zu signalisieren. In der Praxis kann das dann so aussehen, daß die Software nach Art eines Expertensystems anzeigt oder vorschlägt, für die vorgesehene Meßaufgabe die beschriebene Korrektur der Restfehler vorzunehmen, so daß der Benutzer dann auswählen kann, ob er von dieser Korrekturmöglichkeit Gebrauch macht oder nicht.

Weiterhin hat sich herausgestellt, daß es zweckmäßig ist, die Korrektur nur dann einzusetzen, wenn der Quotient aus dem Durchmesser des zu vermessenden zylindrischen Werkstücks und der Abtastgeschwindigkeit in einem bestimmten Bereich, etwa zwischen 4s und 20s liegt. Denn wenn größere Durchmesser mit relativ langsamer Geschwindigkeit abgetastet werden, spielen die eingangs genannten Restfehler noch keine Rolle. Andererseits treten beim Abtasten kleiner Durchmesser mit hoher Geschwindigkeit vermehrt unsystematische Fehler auf, die sich dann auch auf dem beschriebenen Wege nicht mehr korrigieren lassen.

Weitere Vorteile der Erfindung ergeben sich aus der nachfolgenden Beschreibung von Ausführungsbeispielen anhand der Figuren 1-5 der beigefügten Zeichnungen.
- Figur 1: skizziert den prinzipiellen Aufbau eines KMG vom Portaltyp; in
- Figur 2: ist das Meßvolumen des KMG aus Fig. 1 skizziert, in dem ein zur Aufnahme der Formabweichungen dienender Stapel von Lehrringen in verschiedenen Positionen fixiert ist;
- Figur 3: zeigt den Lehrringstapel (11) aus Fig. 2 im Schnitt;
- Figur 4: ist ein Diagramm, in dem die mit dem KMG gemessene Formabweichung (18) und die mit einem Referenzgerät gemessene Formabweichung (17) eines Lehrringes skizziert sind; und in
- Figur 5: sind die Formabweichungen (18) und (17) nach Fig. 4 überhöht für 2 Kreissegmente (S1, S2) dargestellt.

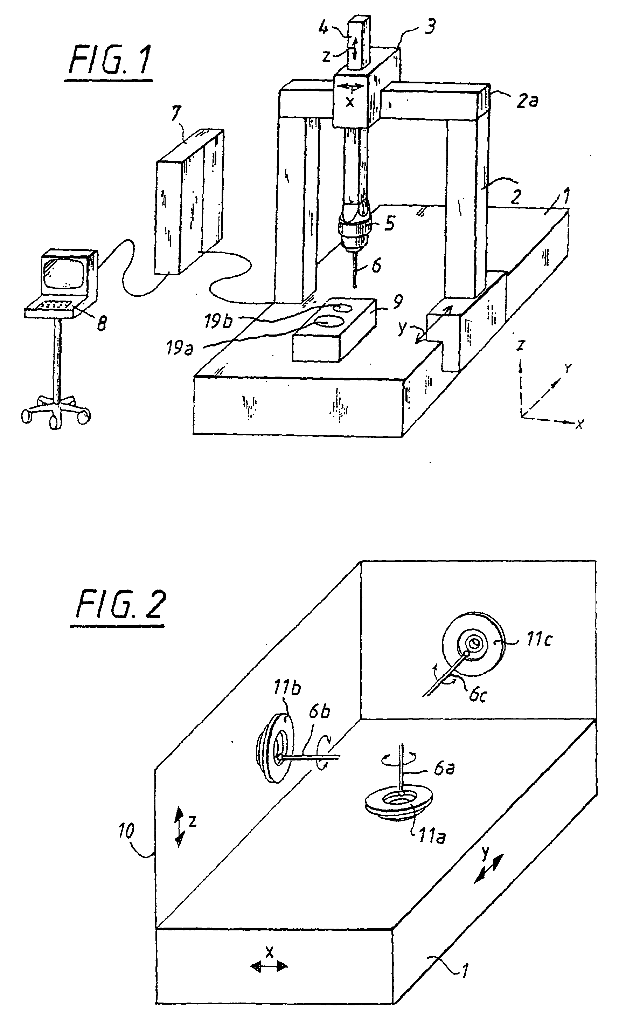

Das in Figur 1 skizzierte Koordinatenmeßgerät vom Portaltyp besteht aus dem Maschinentisch (1), dem waagerecht darauf in y-Richtung verfahrbaren Portal (2), das den auf dem Portalbogen (2a) in x-Richtung geführten sogenannten Querschlitten (3) trägt, und der im Querschlitten (3) vertikal in z-Richtung geführten Pinole (4), an der der Tastkopf (5) mit dem Taststift (6) hängt. Die Steuerung des Koordinatenmeßgerätes ist mit (7) und der Rechner mit (8) bezeichnet.

Will man mit einer solchen Maschine hochgenaue Formmessungen an dem kreisförmigen Geometrieelementen (19a, b) eines Werkstücks (9) ausführen, dann ist zusätzlich zu den Meßfehlern aufgrund der elastischen Deformation z.B. der Pinole (4) unter dem Einfluß der beim kreisförmigen Scannen auftretenden, wechselnden Beschleunigungskräfte noch der Einfluß folgender Restfehler zu berücksichtigen:
1. Der Regler im Tastkopf (5), der die Meßkraft beim Abfahren der kreisförmigen Konturen (19a, b) konstant halten soll, kann den Formänderungen bei höheren Geschwindigkeiten nicht beliebig schnell folgen. Dieses Regelverhalten bildet sich im Meßergebnis ab.
2. Aufgrund der Fliehkräfte/Beschleunigungskräfte ergeben sich trotz der diesbezüglichen Korrektur gemäß dem in der älteren Anmeldung P 44 36 507.1 beschriebenen Verfahren noch Restfehler höherer Ordnung.
3. Abhängig von der Taststiftbiegung bei definierter Meßkraft, der Reibung zwischen Tastkugel und Werkstück sowie der Abtastgeschwindigkeit tritt ein Schleppfehler auf, d.h. der Ort der Tastkugel stimmt nicht mit dem von den Maßstäben des Geräts gemeldeten Koordinatenmeßwerten überein. Dieser Schieppfehler hängt auch von dem Richtungssinn der Abtastbewegung ab.
4. Überlagerungen (Schwingungen und Schwebungen) der o.g. Einflüsse.

Zur Beseitigung der Restfehler aufgrund der genannten Einflüsse wird folgendermaßen vorgegangen:

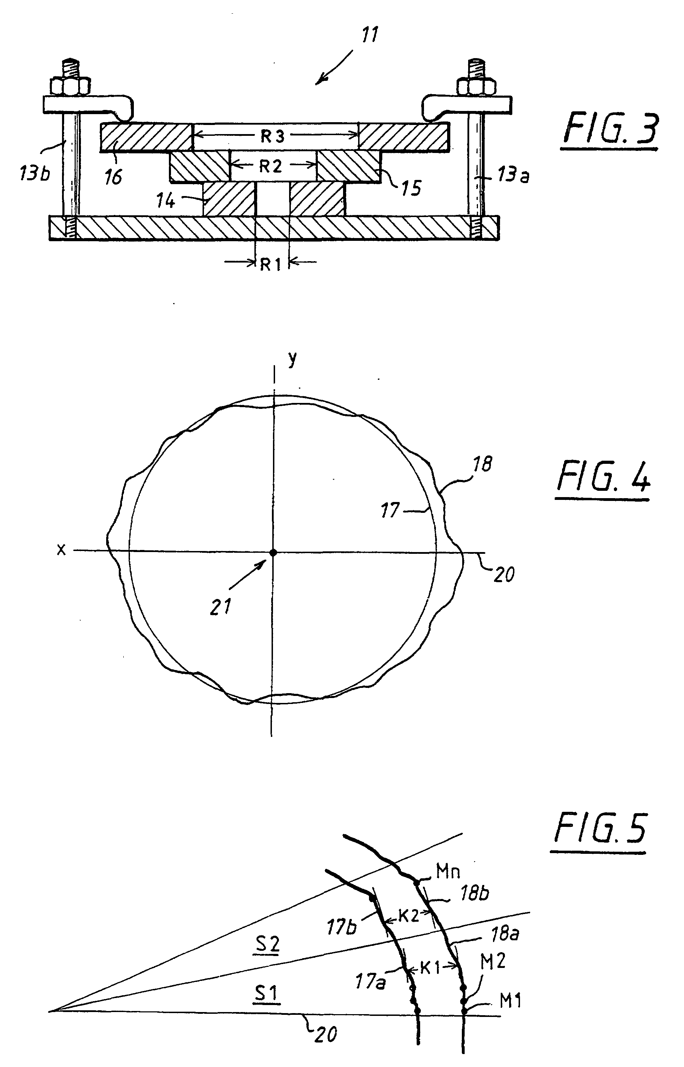

Wie in Figur 2 skizziert wird ein Stapel aus mehreren gesondert kalibrierten und zertifizierten Normalen - hier handelt es sich um Einstellringe mit sehr geringer Formabweichung - in drei verschiedenen Positionen im Meßbereich (10) des KMG so ausgerichtet, daß die gemeinsame Achse dieser Ringe jeweils entlang einer der drei Meßachsen (X, Y, Z) ausgerichtet ist. Im beschriebenen Beispiel sind wie aus Figur 3 ersichtlich ist, drei solcher Ringe (14, 15, 16) mit unterschiedlichen Durchmessern (R1, R2, R3) mit Hilfe von geeigneten, hier sehr vereinfacht dargestellten Spannmitteln (13a, b) auf einer gemeinsamen Platte möglichst deformationsfrei befestigt. Dieses Gebilde kann mit Hilfe nicht dargestellter Aufstellmittel in den drei gezeichneten Stellungen im.Meßbereich (10) fixiert werden. Alternativ dazu ist es auch möglich, einen speziell für diesen Zweck gefertigten Prüfkörper vorzusehen, der Bohrungen unterschiedlichen Durchmessers in einer oder in allen drei orthogonalen Ebenen aufweist.

Anschließend werden die Ringe mit einem entsprechend ausgerichteten Taster (6a, 6b, 6c) am Tastkopf (5) mit unterschiedlichen Abtastgeschwindigkeiten (Vsc) abgetastet und die erhaltenen Meßwerte werden gespeichert. Bei diesem Meßvorgang sind die bisher schon verfügbaren Korrekturverfahren, mit denen z.B. die statischen Abweichungen der Führungen, die Tasterbiegung und die dynamischen Abweichungen nach der älteren Patentanmeldung P 44 36 507 korrigiert werden, eingeschaltet und aktiv.

Im Meßergebnis sind nun der tatsächlichen Form der kalibrierten Normale die vorstehend beschriebenen Restfehler des KMG überlagert. Dieser Sachverhalt ist anhand des Diagramms nach Figur 4 verdeutlicht. Dort ist der mit einem Referenzgerät, beispielsweise einem speziellen Formmeßgerät gemessenen Formabweichung (17) die mit dem KMG gemessene Formabweichung (18) bei einem Durchmesser und einer bestimmten Geschwindigkeit in einem Polarkoordinatendiagramm gegenübergestellt. Man erkennt beispielsweise eine systematische Vergrößerung der Formabweichung durch eine elliptische Verzerrung in Richtung einer Achse (20) und die Überlagerung unterschiedlicher Meßfehler.

Anschließend werden durch Vergleich der mit dem KMG gemessenen Formabweichung (18) und der mit dem Referenzgerät gemessenen Formabweichung (17) Korrekturwerte erzeugt und in Dateien gespeichert. Der Bezugspunkt (21) wird dabei durch den gemeinsamen Mittelpunkt der beiden Ausgleichskreise gebildet, die sich nach der Gaußschen Fehlerausgleichsmethode über die Formabweichungen (17, 18) legen lassen. In den Dateinamen der Korrekturdaten-Datei sind Abtastgeschwindigkeit, Durchmesser (R1, R2, R3) der Ringe, die Lage der Ringe in einer der drei Ebenen (X/Y, X/Z, Y/Z) und der Filter verschlüsselt mit dem die Meßwerte gefiltert worden sind. Damit ist die Parametrisierung der Korrekturdaten bereits aus den Dateinamen der Korrekturdaten-Dateien ersichtlich. So bedeutet beispielsweise der Dateiname XY020V01F050, daß in dieser Datei Korrekturwerte für einen in der XY-Ebene liegenden Ring mit einem Durchmesser von 20 mm gespeichert sind, der mit einer Geschwindigkeit von Vsc = 1 mm/sec. abgetastet wurde, wobei die Meßwerte durch ein Filter mit der Grenzfrequenz 50 Wellen/Umfang geglättet wurden.

Die Dateien selbst haben die Struktur von zweispaltigen Tabellen, wobei in einer Spalte die Winkellage des jeweiligen Meßpunkts bezogen auf die Achsen (X, Y) der Ebene festgehalten ist, in der der Ring liegt, und in der anderen Spalte der zugehörige Korrekturwert, der sich aus der Differenz der mit dem KMG ermittelten Formabweichung (18) zu der mit dem Referenzgerät ermittelten Formabweichung (17) ergibt. Diese Korrekturwerte müssen jedoch nicht für jeden einzelnen Meßpunkt (M1, M2 .... Mn) bestimmt werden. Stattdessen ist wie in Figur 5 skizziert er auch moglich, den Kreis des gemessenen Rings in mehrere Sektoren beispielsweise 150 Sektoren aufzuteilen und für jeden Sektor einen mittleren Korrekturwert (K1, K2) zu bestimmen und diesen dann bezogen auf die Sektornummer (S1, S2) oder auf den zugehörigen Winkelbereich abzuspeichern. Zweckmäßigerweise wählt man die Einteilung der Sektoren und damit die Anzahl der Korrekturwerte korrespondierend zu der Wellenzahl des verwendeten Filters. Es sind jedoch beliebige Kombinationen aus der Anzahl der Korrekturwerte und der verwendeten Filter möglich. In der nachfolgenden Tabelle 1 sind beispielhaft Korrekturwerte bezogen auf 120 Sektoren eines Kreises aufgelistet, wobei die Formabweichung und der Formplot mit einem Filter 50 W/U ermittelt wurden.

**Tabelle 1:**

| Korrekturdatei XY020V01F050 | |
|---|---|
| Kreisumfang/° | Korrekturwert/µm |
| 0 | -0,20 |
| 3 | -0,25 |
| 6 | -0,30 |
| 9 | -0,35 |
| 12 | -0,45 |
| · | · |
| · | · |
| 357 | -0,10 |

Wie vorstehend beschrieben werden also eine Vielzahl von Dateien mit Korrekturdaten erzeugt, wobei die Anzahl der Dateien abhängig von der Zahl der unterschiedlichen Ebenen, der Scanninggeschwindigkeiten (VSc), der Anzahl der verschiedenen vermessenen Ringdurchmesser und der Anzahl der verwendeten Filter ist. Dabei ist es jedoch keineswegs notwendig, alle Möglichkeiten dieser vier Parameter miteinander zu permutieren. Es ist vielmehr zweckmäßig, sich bezüglich des Durchmessers (R) und der Abtastgeschwindigkeit (VSc) auf wenige Kombinationen zu beschränken, die sich dadurch auszeichnen, daß der Quotient (D/VSc) im Bereich von etwa 4s bis 20s liegt. Damit wird gleichzeitig ein sinnvoller Einsatzbereich für das Verfahren abgegrenzt.

Wenn der Umlaufsinn der Messung berücksichtigt wird, ergibt sich eine Verdoppelung der Dateien, wobei dann im Dateinamen noch der Umlaufsinn verschlüsselt werden kann, beispielsweise durch die Reihenfolge der Achsen beim Bezeichnen der Ebene (XY) für positiven Umlaufsinn, (YX) für negativen Umlaufsinn oder durch das Anfügen von P(+) oder P(-) am Ende des Dateinamens.

Nachdem die beschriebenen Dateien mit den Korrekturwerten (K1, K2) erstellt worden sind, können anschließend "reale" Werkstücke bezüglich ihrer Form mit geringer Meßunsicherheit auf dem KMG aus Figur 1 vermessen werden. Hierzu ist die Software des KMG so eingerichtet, daß sie den Benutzer über das Vorhandensein einer entsprechenden Datei mit Korrekturwerten informiert, sobald sich aus der angewählten Meßaufgabe ergibt, daß kreisförmige, zylindrische oder kugelförmige Geometrieelemente gemessen werden sollen, wobei Durchmesser und Abtastgeschwindigkeit im fraglichen Bereich liegen. Der Benutzer kann dann entscheiden, ob er das Korrekturverfahren anwenden will. Entscheidet er sich dafür, dann werden die Meßwerte, die das KMG liefert, u.a. mit den Korrekturwerten (K1, K2 ...) verrechnet und es ergibt sich ein ähnliches Ergebnis, wie man es bei Messung auf einem speziellen Formmeßgerät erhalten hätte.

## Patentansprüche

1. Verfahren zur Koordinatenmessung an Werkstücken mit einem KMG, bei dem die ermittelten Meßwerte (M1, M2 ... Mn) mit gespeicherten Korrekturwerten (K1, K2) verrechnet werden, **dadurch gekennzeichnet, daß**
- in mehreren Positionen (11a, 11b, 11c) bzw. Ebenen (X/Y, X/Z, Y/Z) des Meßbereichs (10) des KMG kreisförmige oder kreissegmentförmige Meßlinien (17) mit jeweils mehreren unterschiedlichen Durchmessern (R1, R2, R3) genau bekannter Form bei unterschiedlichen Geschwindigkeiten (Vsc) abgetastet werden,
- die in Bezug auf die bekannte Form (14, 15, 16) gemessenen, zu den Durchmessern (R1, R2, R3) und den Geschwindigkeiten (Vsc) gehörenden Formabweichungen (K1, K2) als Korrekturwerte gespeichert werden, und
- die Korrekturwerte (K1, K2) bei der anschließenden Koordinatenmessung an kreisförmigen Konturen (19a, b) von Werkstücken (9) mit den Meßwerten (M1, M2, ... Mn) des KMG verrechnet werden.

2. Verfahren nach Anspruch 1, wobei die Meßlinien (17) mit positivem und negativem Umlaufsinn abgetastet werden und die Korrekturwerte (K1, K2) zusätzlich abhängig vom Umlaufsinn gespeichert werden.

3. Verfahren nach Anspruch 1, wobei die gemessenen Formabweichungen (K1, K2) mit unterschiedlichen Filterfunktionen gefaltet und abhängig von der gewählten Filterfunktion gespeichert werden.

4. Verfahren nach Anspruch 1, wobei die gemessenen Formabweichungen sektoriell gespeichert werden, indem jeweils für ein Teil-Kreissegment (S1, S2) der Meßlinie ein Korrekturwert (K1, K2) gespeichert wird.

5. Verfahren nach Anspruch 4, wobei zusätzliche Korrekturwerte für die einzelnen Meßpunkte (M1, M2 ... Mn) innerhalb eines Teil-Kreissegments (S1) aus den gespeicherten Korrekturwerten (K2) für die benachbarten Kreissegmente (S2) interpoliert werden.

6. Verfahren nach einem der Ansprüche 1-5, wobei die Korrekturwerte (K1, K2) in Dateien gespeichert werden, die nach vorbestimmten Meßaufgaben parametrisiert sind.

7. Verfahren nach Anspruch 6, wobei vor der anschließenden Koordinatenmessung an einer kreisförmigen Kontur (19a, b) die Meßaufgabe beschreibende Parameter (R, Vsc) mit den Dateien verglichen werden und das Vorhandensein von zur Meßaufgabe passenden Korrekturwerten signalisiert wird.

8. Verfahren nach einem der Ansprüche 1-7, wobei die Formabweichungen beschreibenden Korrekturwerte (K1, K2) für einen vorbestimmten Bereich (A) des Quotienten (R/Vsc) des Durchmessers (R) der Meßlinie (17) und der Abtastgeschwindigkeit (Vsc) ermittelt und gespeichert werden.

9. Verfahren nach Anspruch 8, wobei der Bereich (A) zwischen 4s und 20s liegt.

## Claims

1. Method of measuring coordinates on workpieces with a CMM, in which the measured values determined (M1, M2, ... Mn) are set against stored correction values (K1, K2), **characterized in that**
- in a plurality of positions (11a, 11b, 11c) or planes (X/Y, X/Z, Y/Z) of the measurement range (10) of the CMM, circular or circular-segment-shaped measurement lines (17) with respectively a plurality of different diameters (R1, R2, R3) of precisely known form are scanned at different speeds (Vsc),
- the shape deviations (K1, K2) measured in relation to the known shape (14, 15, 16) and belonging to the diameters (R1, R2, R3) and the speeds (Vsc) are stored as correction values, and
- the correction values (K1, K2) are set against the measured values (M1, M2, ... Mn) from the CMM during the subsequent measurement of coordinates on circular contours (19a, b) of workpieces (9).

2. Method according to Claim 1, the measurement lines (17) being scanned in the positive and negative direction of circulation, and the correction values (K1, K2) additionally being stored on the basis of the direction of circulation.

3. Method according to Claim 1, the measured shape deviations (K1, K2) being convoluted with different filter functions and stored on the basis of the selected filter function.

4. Method according to Claim 1, the measured shape deviations being stored sector by sector, in that in each case a correction value (K1, K2) is stored for a part circular segment (S1, S2) of the measurement line.

5. Method according to Claim 4, additional correction values for the individual measured points (M1, M2 ... Mn) within a part circular segment (S1) being interpolated from the stored correction values (K2) for the adjacent circular segments (S2).

6. Method according to one of Claims 1-5, the correction values (K1, K2) being stored in files whose parameters are set in accordance with predetermined measurement tasks.

7. Method according to Claim 6, where, before the subsequent coordinate measurement on a circular contour (19a, b) the parameters (R, Vsc) that describe the measurement task are compared with the files, and the presence of correction values fitting the measurement task is signalled.

8. Method according to one of Claims 1-7, the correction values (K1, K2) that describe the shape deviations for a predetermined range (A) of the quotient (R/Vsc) of the diameter (R) of the measurement line (17) and the scanning speed (Vsc) being determined and stored.

9. Method according to Claim 8, the range (A) lying between 4s and 20s.

## Revendications

1. Procédé pour la mesure de coordonnées sur des pièces à usiner à l'aide d'un instrument de mesure de coordonnées IMC, dans lequel les valeurs de mesure trouvées (M1, M2, ..., Mn) sont traitées avec des valeurs de correction enregistrées (K1, K2),
**caractérisé en ce que**
- dans plusieurs positions (11a, 11b, 11c) respectivement dans plusieurs plans (X/Y, X/Z, Y/Z), de la plage de mesure (10) de l'IMC, des lignes de mesure (17) de forme circulaire ou en forme de segment circulaire respectivement de plusieurs diamètres différents (R1, R2, R3) de forme exactement connue sont palpées à des vitesses différentes (Vsc),
- les écarts de forme (K1, K2) mesurés par rapport à la forme connue (14, 15, 16) associés aux diamètres (R1, R2, R3) et aux vitesses connues (Vsc) sont enregistrés en tant que valeurs de correction, et
- les valeurs de correction (K1, K2) sont traitées avec les valeurs de mesure (M1, M2, ..., Mn) lors de la mesure de l'IMC suivante de coordonnées de contours de forme circulaire (19a, b) de pièces à usiner (9).

2. Procédé selon la revendication 1, dans lequel les lignes de mesure (17) sont palpées dans le sens de révolution positif et négatif et les valeurs de correction (K1, K2) sont de plus enregistrées en dépendance avec le sens de révolution.

3. Procédé selon la revendication 1, dans lequel les écarts de forme mesurés (K1, K2) sont convolués avec différentes fonctions de filtrage et sont enregistrés en dépendance avec la fonction de filtrage choisie.

4. Procédé selon la revendication 1, dans lequel les écarts de forme mesurés sont enregistrés de manière sectorielle en ce qu'on enregistre chaque fois une valeur de correction (K1, K2) pour une partie de segment circulaire (SI, S2) de la ligne de mesure.

5. Procédé selon la revendication 4, dans lequel des valeurs de correction supplémentaires sont interpolées pour les points de mesure individuels (M1, M2, ..., Mn) à l'intérieur d'une partie de segment circulaire (SI) à partir des valeurs de correction (K2) enregistrées pour les segments circulaires voisins (S2).

6. Procédé selon l'une des revendications 1 - 5, dans lequel les valeurs de correction (K1, K2) sont enregistrées dans des fichiers qui sont paramétrés selon des processus de mesure prédéfinis.

7. Procédé selon la revendication 6, dans lequel avant la mesure suivante de coordonnées d'un contour de forme circulaire (19a, b), les paramètres (R, Vsc) décrivant les processus de mesure sont comparés avec les fichiers et la disponibilité de valeurs de correction adaptées au processus est signalée.

8. Procédé selon l'une des revendications 1 - 7, dans lequel les valeurs de correction (K1, K2) décrivant les écarts de forme pour une plage (A) prédéfinie du quotient (R/Vsc) du diamètre (R) de la ligne de mesure (17) et de la vitesse de palpation (Vsc) sont trouvées et enregistrées.

9. Procédé selon la revendication 8, dans lequel la plage (A) se trouve entre 4s et 20s.
